# EUROPEAN PATENT SPECIFICATION

(11) **EP 1 803 060 B1**
(45) Date of publication and mention of the grant of the patent: **09.07.2008**
(21) Application number: 05789809.0
(22) Date of filing: 10.10.2005
(51) Int. Cl.: G06F 7/58, H03K 3/84

(54) **INTEGRATED CIRCUIT WITH A TRUE RANDOM NUMBER GENERATOR**
INTEGRIERTE SCHALTUNG MIT EINEM ECHTEN ZUFALLSZAHLENGENERATOR
CIRCUIT INTEGRE A GENERATEUR DE NOMBRES ALEATOIRES VRAIS

(30) Priority: 15.10.2004 EP 04105081
(43) Date of publication of application: 04.07.2007
(60) Divisional application: 07121330.0
(73) Proprietor: NXP B.V., 5656 AG Eindhoven (NL)
(72) Inventor: HASELSTEINER, Ernst, A-1101 Vienna (AT); TUYLS, PIM c/o NXP Semiconductors Austria Gmbh, A-1102 Vienna (AT)
(74) Representative: van der Veer, Johannis Leendert
(86) International application number: PCT/IB2005/053314
(87) International publication number: WO 2006/040724

(56) References cited:
- US-A1- 2002 165 888
- PATENT ABSTRACTS OF JAPAN vol. 017, no. 706 (E-1483), 22 December 1993 (1993-12-22) & JP 05 243922 A (ALPS ELECTRIC CO LTD), 21 September 1993 (1993-09-21)

## Description

### FIELD OF THE INVENTION

The invention relates to an integrated circuit with a true random number generator. The invention further relates to the use of a physically uncloneable function for generating random numbers.

### BACKGROUND OF THE INVENTION

The document WO2004/051458 discloses an integrated circuit as defined in the opening paragraph. According to the disclosure of this document, true random numbers are generated by means of a microprocessor operating at a first frequency, a counter for generating bits, a shifter for scrambling bits, a first oscillator for cooperating with the counter and a second oscillator cooperating with the shifter, wherein the oscillators provide a frequency perturbation based on digital input signals to generate a random signal. This random signal is sampled and used to derive single random bits. The bits are collected and a user can request a random byte after at least eight random bits have been collected. A disadvantage of this approach is that it usually takes a lot of CPU clocks before a new random bit can be retrieved. Thus, in the case of using a bigger amount of random bytes (e. g. for blinding in cryptographic operations), the execution time of the algorithm is limited by the speed of the random number generator. A further disadvantage of this embodiment is that since the circuitry for generating an input signal is an active piece of hardware, it is possible to attack it such that the random numbers are not random anymore. This way the blinding of a cryptographic algorithm could be broken. To avoid this, it is required to carry out randomness tests on the random number generator all the time. Since these tests take very long they slow down cryptographic algorithms.

Other approaches to random number generation are known from US 2002 0 165 888 A1 and JP 0 5243 922 A.

### OBJECT AND SUMMARY OF THE INVENTION

It is an object of the invention to provide an integrated circuit of the type defined in the opening paragraph and a use therefore of the type defined in the second paragraph, wherein the disadvantages defined above are avoided.

This object is achieved by a device according to the invention having such characteristic features that a device according to the invention can be characterized in the way defined below, that is:
An integrated circuit with a true random number generator, which true random number generator comprises at least one instable physically uncloneable function for generating true random numbers.
The object defined above is achieved by a use according to the invention, which provides such characteristic features that the use of a physically uncloneable function according to the invention can be characterized in the way defined below, that is:
   Use of an instable physically uncloneable function embedded in an integrated circuit to generate a random number.

The characteristic features according to the invention provide the advantage that true random numbers can be generated very efficiently, because it is not necessary to run the time and memory consuming tests on the random number generator, since the random numbers are not generated by an active circuit but by means of an instable physically uncloneable function. The meaning of the term "instable" in the present context is that the physically uncloneable function changes its characteristics unpredictably as a result of environmental influences such as temperature, humidity, electromagnetic fields, etc., or due to ageing. Thus, generation of the random numbers is based on accidental processes, that are very difficult to be influenced by an attacker.

Physically uncloneable functions are in general well known in the prior art. One example is disclosed in WO 03/046986 which describes a semiconductor device comprising security elements in a passivation layer of the device. The passivation structure has an effective dielectric constant that varies laterally over the circuit in an unpredictable way, thereby enabling the authentication verification of said semiconductor device. Whereas different circuits have different physically uncloneable functions, a physically uncloneable function on one circuit should not change over time, so that an identification procedure delivers always an unambiguous result.

A further example of the use of a physically uncloneable function as stated above is described in US 2003/0204743, which discloses a group of devices having a common design but also a corresponding plurality of measurable characteristics that is unique to a device. Here a physically uncloneable function is again used for authentication. Hence, a variation of said characteristics over time has to be suppressed for the reasons stated above.

Finally, US 6,711,342 discloses an optical random number generator including an interferometer. The optical interferometer has a chaotic output depending upon temperature fluctuations in the surroundings. In fact, the document is related to a true random number generator, but because of the size of an interferometer it cannot be integrated into an electronic circuit. Thus, such a random number generator is not applicable to smart cards or other small devices such as a mobile phone for instance. US 6,711,342 furthermore does not disclose a method where each device of a group of devices has a different random number generator.

By contrast, the invention provides a method where each device of a group of devices includes a physically uncloneable function which naturally varies for different devices in an unpredictable way. Thereby each device has its own unique physically uncloneable function which - in contrast to the prior art - is furthermore designed to deliver an output signal varying over time even when the same challenge is input. Hence, each device of said group is provided with a unique true random generator, so that each device of the group is provided with different true random numbers even when said devices are applied to identical environmental conditions. In this way security for e.g. cryptographic tasks, wherein random numbers play an important role, is substantially increased. A practical example of the invention would be a random number generator on a smart card as well as in a module for near field communication, which is nowadays part of various devices such as mobile phones, PDAs and the like. It is easy to imagine that one skilled in the art can derive other applications as well without extensive effort and without departing from the scope of the invention.

According to an advantageous embodiment of the invention, the integrated circuit comprises means for measuring a physical property of the physically uncloneable function. This embodiment provides the advantage that producing random numbers can be done in a very simple and secure way based on measured changes of physical values of the physical property.

According to another advantageous embodiment of the invention, the integrated circuit comprises a signal generator connected with the physically uncloneable function for challenging the physically uncloneable function with an input signal. This embodiment of the invention provides the advantage of producing random numbers in a very simple and secure way based on a response from the physically uncloneable function to the input signal.

If the integrated circuit comprises a pseudo random number generator cooperating with the physically uncloneable function in such a way that an output signal of the physically uncloneable function or values measured by means of the measurement means are a seed for the pseudo random number generator, the advantage is provided that if environmental influences such as temperature, humidity, etc. change slowly, random numbers can be generated in a very easy and secure way anyway.

According to another advantageous embodiment of the invention, the physically uncloneable function is realized by means of a porous dielectric material which is arranged between at least two electrodes. This embodiment achieves the advantage that random numbers can be generated very effectively, since the generation of random numbers is based on fluctuations in humidity.

If the physically uncloneable function is realized by means of a photosensitive semiconductor material, the advantage is achieved that the generation of random numbers can be executed very fast.

However, it has proved to be particularly advantageous if the physically uncloneable function is realized by means of a metal with an electric resistance depending on temperature. This metal achieves the advantage of a high sensitivity to temperature changes.

In a further embodiment of the invention, the measurement means are arranged to measure an inductance and/or capacitance of the physically uncloneable function. This provides the advantage of easy integration of the measurement means into an integrated circuit.

If the physically uncloneable function is realized by means of at least one electric circuit and the measurement means are arranged to measure a runtime delay of signals of the at least one electric circuit, the advantage is achieved that the true random number generator can be implemented very easily using conventional integrated circuit design techniques.

According to another embodiment of the invention, the signal generator is capable of applying a first mechanical vibration serving as the input signal for the physically uncloneable function, so as to cause a second mechanical vibration as the output signal of the physically uncloneable function. This has the advantage that the generation of random numbers can be executed very fast, since this embodiment is very sensitive to temperature fluctuations.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment, but these are not to be construed as limiting the scope of the invention.
Fig. 1 shows a first embodiment of an integrated circuit according to the invention in the form of a schematic block circuit diagram.
Fig. 2 shows a second embodiment of an integrated circuit according to the invention in the form of a schematic block circuit diagram
Fig. 3 shows a third embodiment of an integrated circuit according to the invention in the form of a schematic block circuit diagram.
Fig. 4 shows a fourth embodiment of an integrated circuit according to the invention in the form of a schematic block circuit diagram.
Fig. 5 shows means for measuring the value of a parameter characteristic of the physically uncloneable function of Fig. 6.
Fig. 6 shows a first embodiment of a physically unclonable function according to the invention in the form of a schematic circuit diagram.
Fig. 7 shows a cross-section of an integrated circuit according to the invention with a second embodiment of a physically uncloneable function.
Fig. 8 shows a cross-section of an integrated circuit according to the invention with a third embodiment of a physically uncloneable function.
Fig. 9 shows an integrated circuit according to the invention with means for measuring the value of a parameter characteristic of the physically uncloneable function of Fig. 7 or Fig. 8.
Fig. 10 shows a cross-section of an integrated circuit according the invention with a further embodiment of a physically uncloneable function.

### DESCRIPTION OF EMBODIMENTS

The Figures are schematically drawn and not true to scale, and identical reference numerals in different Figures refer to corresponding elements. It will be clear to those skilled in the art that alternative but equivalent embodiments of the invention are possible without deviating from the true inventive concept, and that the scope of the invention will be limited by the claims only.

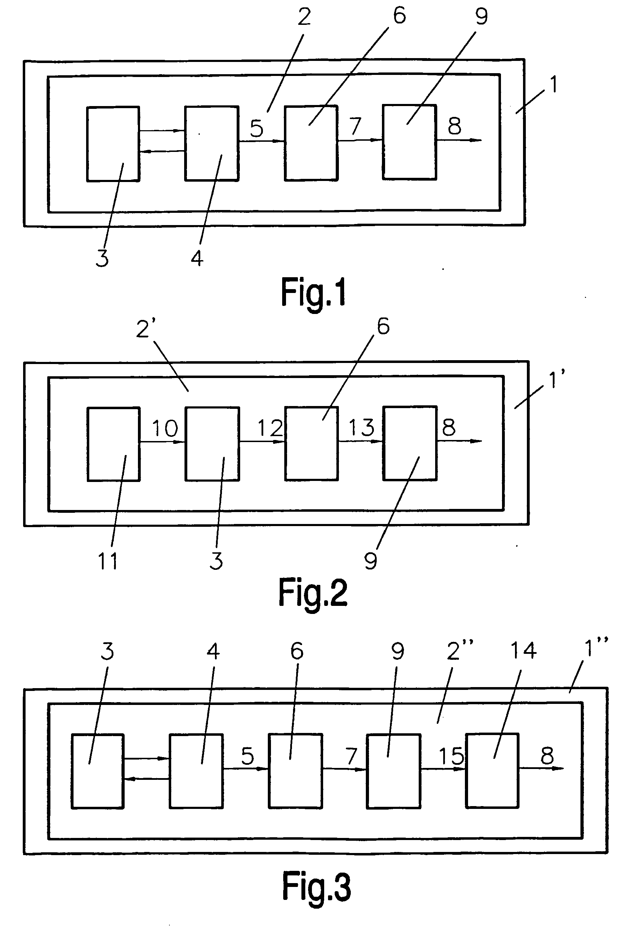

Fig. 1 shows an integrated circuit 1 according to the invention. In the following, the abbreviation "IC" is used instead of "integrated circuit". An IC 1 comprises a true random number generator 2, hereinafter referred to as "TRNG", with an instable physically uncloneable function 3.

A physically uncloneable function, hereinafter abbreviated as "PUF", is in general defined as a function that maps challenges to responses, that is embodied by a physical device such as the IC 1, and that verifies the following property. PUFs shall be easy to evaluate and hard to characterize.

Easy to evaluate means that the IC 1 is easily capable of evaluating the PUF 3 in a short amount of time.

Hard to characterize means that from a large number of plausible physical measurements (in particular, determination of chosen challenge-response pairs), an attacker who no longer has the device, and who can only use a finite amount of resources (time, matter etc.) can only extract a negligible amount of information about the response to a randomly chosen challenge.

The PUF 3 is characterized by a physical property, or to be more exact by a physical parameter, such as the inductance or capacitance or runtime delays of signals. Due to the instability of the PUF 3, the physical property or parameter characterizing the PUF 3, such as its inductance or capacitance, changes its values in the course of time unpredictably.

Furthermore, according to a preferred embodiment of the invention, the PUF 3 is "controlled". This means that it can only be accessed via one or more access means that are physically linked to the PUF 3 in an inseparable way, e.g. an algorithm realized by means of hard- or software embedded in the integrated circuit, such as means 4 for measuring changes of the physical parameter of the PUF 3. Thus, any attempt to circumvent this access means will lead to the destruction of the PUF 3. In particular this access means can restrict the challenges that are presented to the PUF 3 and can limit the information about responses that is given to the outside.

Since PUFs 3 are in general manufacturer resistant, as they use characteristics that are beyond the control of the fabrication process, the PUF 3 cannot be copied even with a reasonable amount of effort. Thus, it is essentially technically impossible to produce two identical PUFs 3 of the same type.

Values of the physical parameter characterizing the PUF 3 are collected by means of measuring means 4 physically connected to the PUF 3. According to the preferred embodiment of the invention, the impedance of the PUF 3 is measured. Hereinafter, the term impedance will be used in general for capacitances and inductances.

In general, the implementation of the measuring means 4 depends on the specific type of impedance to be measured. The impedance may be measured for instance with a conventional circuit, as it is known from the state of the art.

In a preferred implementation, the measuring means 4 comprise an oscillator and a binary counter. With the oscillator, the imaginary part of the impedance of the PUF 3 can be measured, which results in a signal with a frequency that depends on said part of the impedance. The advantage of this implementation lies in its use of standard components, such as oscillators and binary counters. These are usually present in the IC 1 already and can be applied as measuring means 4.

In another embodiment, the impedance of the PUF 3 can be measured by feeding into the PUF 3 a square wave of known frequency and amplitude generated within the IC 1 as it is known from the state of the art. The calculated actual value 5 thereof is then digitized, by means of an A/D converter 6 within the IC 1, into a value 7, that is indicated as "measured value" 7 in the following.

The measured value 7 is true random, since it depends on statistical environmental influences, that cause a change of the impedance of the PUF 3 in the course of time.

A measured value 7 corresponds to a random bit. In the case where the PUF's 3 parameter looked at changes very quickly, a random number 8 is generated by collecting several measured values 7 by means of a collecting means 9 such as a register or shift register. By thus collecting eight measured values 7, one random byte of the random number 8 can be generated. The TRNG 2 bases its output, i.e. the random number 8, on the underlying random physical process, i.e. the change of the values of the parameter of the PUF 3 caused by environmental influences.

Another embodiment of the invention, which comprises an IC 1' with an TRNG 2', is shown in Fig. 2. Here an input signal 10, constant or variable, is fed into the PUF 3 instead of measuring the change of a parameter of the PUF 3 directly. The input signal 10 of the PUF 3 is produced by means of a signal generator 11 embedded in the true random number generator 2' of the IC 1'. The input signal 10 for example may be a random number from signal generator 11 as well as the random number 8 which is looped back to provide PUF 3 with random challenges (loopback not shown in Fig. 2). The system response of the PUF 3 - the output signal 12 - then will depend in an unpredictable way on the change of the parameters' values caused by environmental influences, and thus will be random. In the embodiment shown in Fig. 2, the output signal 12 constitutes the random number. As is the case with the embodiment shown in Fig. 1, the output signal 12 is digitized by means of the A/D converter 6. The digitized signal 13 then is collected by the collecting means 9 to produce the random number 8.

According to another embodiment of the invention, which comprises an IC 1" with a TRNG 2" as shown in Fig. 3, the measured values 7 of the parameter of the PUF 3 serve as a seed for a pseudo random number generator 14, in the following abbreviated as PRNG 14, which is also embedded in an IC 1". This is of advantage especially in the case where the PUF 3 is not sensitive enough for environmental influence to provide really fast random numbers 8. The calculated value 5 is read from the measurement means 4 and then digitized by the A/D converter 6. The output of the A/D converter 6, the measured value 7, is subsequently collected by the collecting means 9. The resulting value 15 is then used in the PRNG 14 for further generation of the random number 8. The PRNG 14 comprises an algorithm, as is known to those skilled in the art, which is initialized with one or several resulting values 15. This algorithm produces a much longer output sequence than the input sequence provided by the PUF 3. The output sequence of the PRNG 14, i.e. the random number 8, appears to be random too, since the value 15, on which the calculation is based, is true random. After being initialized with the value 15, the internal state of the PRNG 14 completely determines the next bit to be generated. Thus, given the same seed value 15 the PRNG 14 will always produce the same output sequence. As the seed is determined by statistical and unpredictable environmental influences, the seed value 15 is always random and, as already mentioned above, the output sequence of the PRNG 14 - the random number 8 - thus cannot be predicted.

The embodiments of Figs. 1 and 3 can be realized independently of one another or in combination with one another. In the latter case the IC 1" can comprise decision means to decide whether to use the measured and digitized signal 7 of the PUF 3 directly or as a seed for the PRNG 14 to produce the random number 8. The decision means can, for instance, be realized by means of a respectively configured processor.

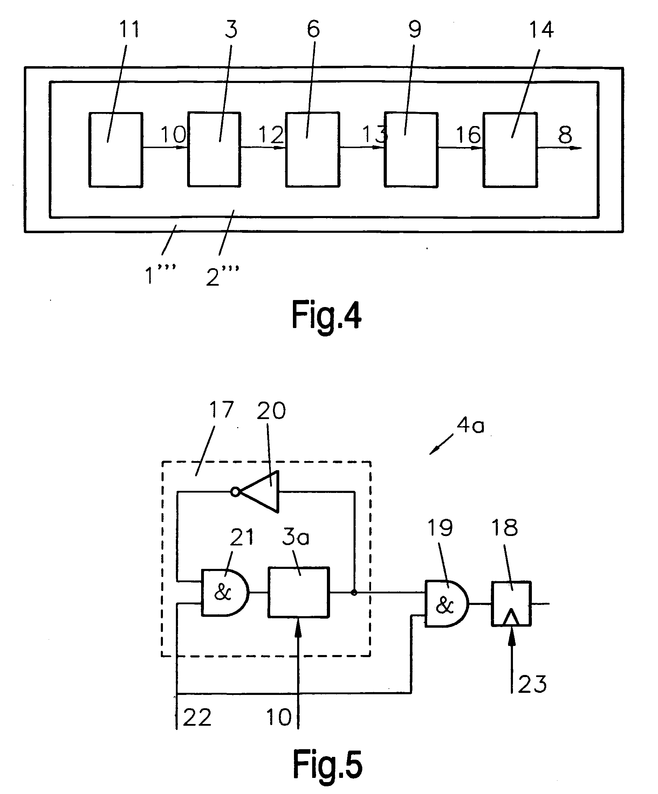

In the embodiment of the invention as shown in Fig. 4, the PUF 3 of the IC 1"' is fed with the signal 10 generated by the signal generator 11.Due to the changes of the PUF 3 caused by environmental influences, the signal 10 is mapped in an unpredictable way to the output signal 12, as already mentioned above with respect to Fig. 2. Again a random number from signal generator 11 as well as the random number 8, which is looped back, is imaginable as an input signal 10. If the PUF 3 does not react very quickly to environmental changes, the output signal 12 does not change very quickly either. In this case it is of advantage if the output signal 12 of the PUF 3 serves as a seed for the PRNG 14 of the TRNG 2"', analogous to the embodiment shown in Fig. 3. The output signal 12 is then digitized by means of the A/D converter 6 and collected with the collecting means 9 as well. The resulting value 15 is then used in the PRNG 14 for further generation of the random number 8.

Fig. 5 shows measurement means 4a, which are an embodiment of the measurement means 4 shown in Figs. 1-4 and which are embedded in one of the ICs 1, 1', 1", 1"'. Accordingly, a PUF 3a is also shown in Fig. 5 which is realized by means of a circuit embedded in the IC indicated by means of 1, 1', 1", 1"' in the Figs. 1-4. This circuit is hereinafter referred to as "delay circuit" and indicated by means of reference number 3a, since it is an embodiment of the PUF 3 shown in Figs 1-4. The physical parameter that is measured is the runtime delay of signals in the delay circuit 3a. The measurement means 4a comprise a parameterized self-oscillating circuit 17 built up of a first AND-gate 21, the PUF 3a, and an inverter 20 in a feedback loop. The frequency of the signal available at the output of the self-oscillating circuit 17 is a function of the delay of signals of the delay circuit 3a, which delay depends on the input signal 10 fed into PUF 3a and on environmental changes. The rising edges of the resulting waveform is subsequently counted by a frequency counter 18 which is activated for a predefined number of clock cycles, after which the frequency of the self-oscillating circuit 17 can be read out of the counter 18. The activation of the self-oscillating circuit 17 as well as of the counter 18 can be performed by an enable signal 22 which is fed into the first and a second AND-gate 21 and 19, respectively. The counter 18 itself is clocked by a clock signal 23. It should further be noted that measurement means 4a may comprise further modules, which are not shown. For instance the output signal of the self-oscillating circuit 17 can be synchronized by a clocked latch. Furthermore, the frequency of said output signal can be divided by additional counters.

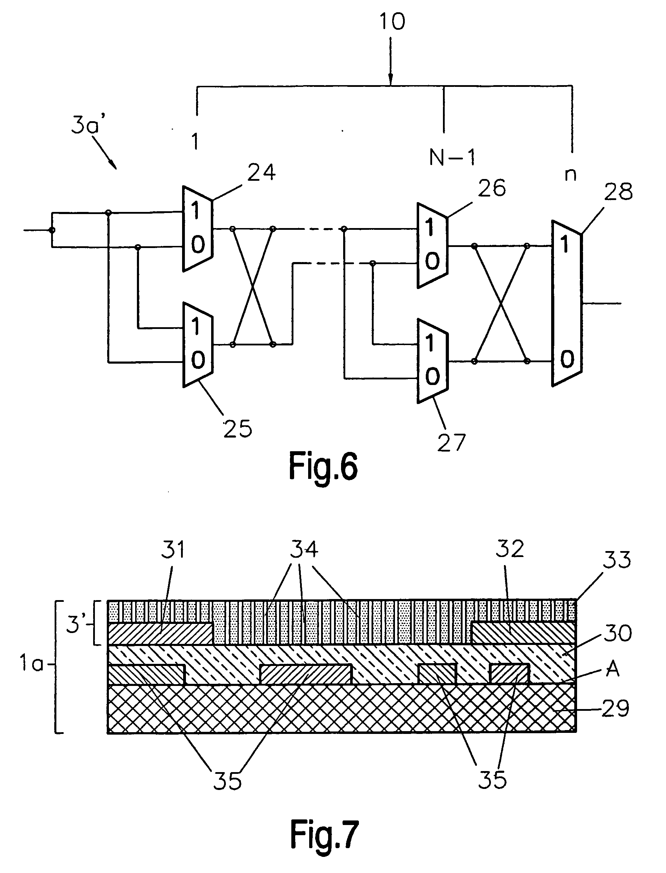

Fig. 6 now shows a delay circuit 3a', which is an embodiment of the delay circuit 3a of Fig. 5, and which is made up of n-1 stages, where n is the number of bits in the input signal 10. Each stage comprises two multiplexers 24, 25; 26, 27. At the input to the delay circuit 3a', a rising or falling edge gets sent into both the upper and lower path of the delay circuit 3a'. At each stage of the delay circuit 3a', depending on the value of the bit of the input signal 10 allocated to the respective stage, the edges may cross one another, that is, the edge from the lower path goes to the higher path and vice versa. One of the two edges is then selected by the output multiplexer 28 to be looped back to the input of the delay circuit 3a' in order for self oscillations to occur. Delays of paths are measured by means of the frequency counter 18 mentioned above. The delays in the delay circuit 3a' will vary due to environmental conditions, mainly temperature variations. The measured delay of the delay circuit 3a' either constitutes a bit of a random number 8 or can serve as a seed for a pseudo random number generator 14.

In Fig. 7 an IC 1a is shown in a cross-sectional view, thus depicting its physical structure. The functional structure of IC 1a may be that of one of the ICs 1' to 1"' of Figures 1-4. IC 1a in general has a substrate 29 of silicon with a first side A. On this side A the IC 1a is provided with active elements 35 such as bipolar or field effect transistors. As is known to those skilled in the art, other elements such as capacitors, resistors and diodes may be integrated in the IC 1a as well. These active elements 35 are not necessarily related to functions with respect to the invention. Rather they can serve for any other function as known in the prior art, thus combining a known electronic device with the inventive TRNG.

The PUF 3' is realized, according to the embodiment shown, by means of two electrodes 31, 32 defined in a metal layer of the integrated IC 1a. The electrodes 31, 32 are arranged at a distance from one another in a layer 33 of a dielectric material that is capable of absorbing humidity. The layer 33 consists, according to a first embodiment, of porous SiLK. Porous SiLK is a dielectric resin with a polymer matrix that incorporates a pore structure with distributed pores 34. The pores 34 are unpredictably distributed over the layer 33, which is symbolized through varying distances between pores 34. In this embodiment the PUF 3' has an impedance which depends on the actual amount of humidity taken up by the pores 34. Thus the PUF 3' is very sensitive to humidity.

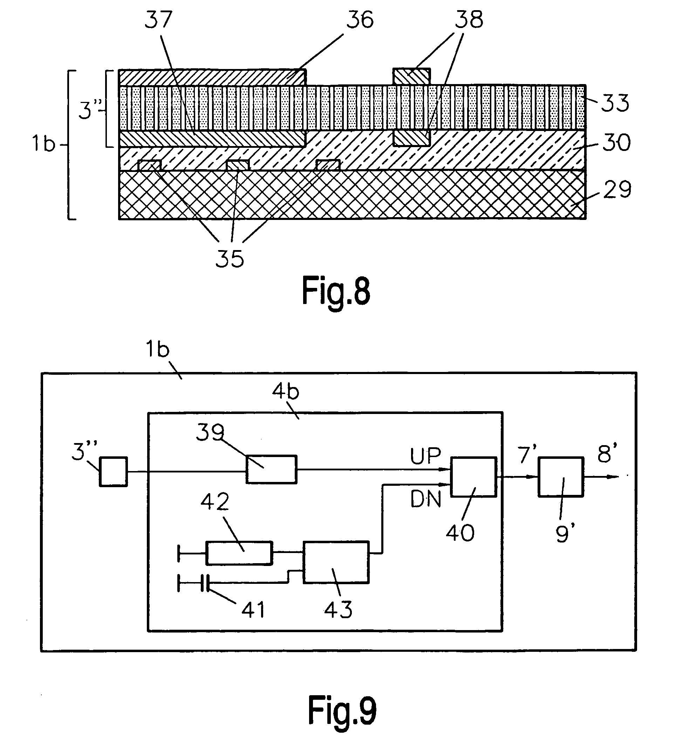

Alternatively to using porous SiLK, the layer 33 can be made of porous silicate spin-on glass . The porous glass is bonded onto the substrate of the IC 1a in a way known to those skilled in the art. The parameter looked at in the case of this embodiment is the inductance of the PUF 3'. The impedance of the PUF 3' is measured by means of measuring means 4b connected to the PUF 3', as they are shown in Fig. 9

Fig. 8 shows an IC 1b as a further embodiment according to the invention, which again may have the functional structure of one of the ICs 1'..1"' of Figures 1-4. IC 1b comprises a PUF 3", which is an embodiment of a general PUF 3. PUF 3" is an LC-structure which comprises a capacitor with a first electrode 36, a second electrode 37, a dielectric layer 33 of porous material, as mentioned above, and a coil 38. The windings of the coil 38 can be arranged so that the axis of the coil 38 is in parallel with the dielectric layer 33 (shown in Fig. 8) or so that the axis of the coil 38 crosses the dielectric layer 33 (not shown). In the latter case there can be one winding below dielectric layer 33 and one above said layer. Anyway, a change of the physical characteristics of dielectric layer 33 leads to a change of the inductance of the coil 38. It is easy to imagine that the invention applies to any combination of capacitors and inductors. Thus, Fig. 8 only serves as a simplified example.

Contrary to the embodiment of Fig. 7, the first and the second electrode 36, 37 are not present in the same layer on the same side of the layer 33. The first electrode 36 as well as a part of the coil 38 are present in a metal layer attached to the layer 33. The second electrode 37 as well as a further part of the coil 38 are present in an additional metal layer between the layer 33 and the active elements 35. Interconnections between the elements are not shown in Fig. 8 (nor in Fig. 7) for reasons of brevity. By renunciation of an additional protective layer for the metal layer, in which the first electrode 36 is defined, a very high sensitivity of the PUF 3" to environmental influences can be obtained. The changes in impedance of the PUF 3" again can be measured by the measuring means 4b as shown in Fig. 9.

Fig. 9 shows measuring means 4b which are an embodiment of the general measuring means 4 shown in Figs. 1-4 and which are integrated in an IC 1b according to the invention. Certainly the functional structure of IC 1b again could refer to one of the ICs 1'..1'" of Figs. 1-4. The PUF 3" of Fig. 8 is shown as well, but it is possible that the IC 1b comprises more than one PUF 3" or another type of PUF.

The measuring means 4b of this embodiment measure the imaginary part of the impedance of the PUF 3". In fact the oscillator 39, whose frequency depends on said imaginary part of the measured PUF 3, provides a signal to a counter 40 via an upcount input UP. The counter 40 compares this frequency with a signal having a known clock frequency. This signal originates from oscillator 43 whose frequency is defined by means of an external capacitor 41 and an external resistor 42, which both have a precise and well known value. The signal from oscillator 43 is then fed into counter 40 via a downcount input DN. The result of the binary counter 40 is the digitized signal 7' which represents a value for the deviation of the signal from oscillator 39 with respect to the known clock frequency. Said digitized signal 7' therefore represents a value representative of the impedance of the measured PUF. The actual value 7' may be present in any kind of SI-unit, or else in any semiconductor specific value, and can be stored in the collecting means 9' to constitute the random number 8' or to serve as the seed for the PRNG 14 of Figs. 3 or 4.

According to a further embodiment of the invention, the PUF 3 is realized as an "acoustic" PUF. For the description of this embodiment, reference will again be made to Fig. 2. For realizing the acoustic PUF 3 any piece of inhomogeneous material can be used in principle, in any suitable shape, for example parallelepiped or cylindrical. The PUF 3 can comprise a resin in cured state having inhomogeneities dispersed therein. As an alternative it may consist of two or more layers of different materials, conjoined by irregular interfaces. In order for the PUF 3 to be unique, the inhomogeneous material is produced by means of a random non reproducible process, like for example dispersing granular particles or bubbles in a resin in a fluid state, curing the resin and cutting a portion thereof.

The IC 1' comprises, in the case of an acoustic PUF 3, the signal generator 11 for generating a challenge for the PUF 3. According to this embodiment, the signal generator 11 is capable of applying as the input signal 10 for the PUF 3 a first mechanical vibration, so as to cause a second mechanical vibration as output signal 12. The response of the PUF 3 to the challenge, i.e. the output signal 12, is detected by means of an acoustic transducer, not shown in Fig. 2, embedded in the IC 1'. Since the acoustic PUF 3 is very temperature-sensitive, the response of the PUF 3 changes according to changes in temperature in an unpredictable way.

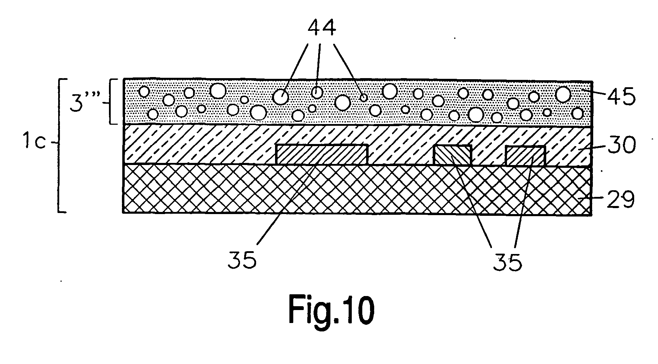

In a further embodiment of the invention illustrated in Fig. 10, a PUF 3"' can be realized by an IC 1c, again comprising a substrate 29 with active elements 35 in a passivation layer 30 with an Al or Cu layer 45 on top. Layer 45 contains inhomogeneously distributed dielectric particles 44, which inhomogeneous distribution of particles 44 can be accomplished in several ways: the layer 45 may contain particles 44 of different sizes, different compositions, different shapes, different orientations and in concentrations that vary over the area of the layer 45. A consequence thereof is that the resistance of the PUF 3"' cannot be predicted. The PUF 3"' is designed such that it is extremely difficult to remove from the IC 1c. Since the resistance of Cu and Al has a strong temperature dependence, this embodiment is very sensitive to changes in temperature too. According to this embodiment of the invention, the measurement means of the IC 1 c are means for measuring a resistance.

Alternatively, the PUF 3'" can be realized by means of a light-sensitive semiconductor material, e.g. a diode made of Si wherein the diode comprises dielectric particles distributed inhomogeneously in it. Since the electric resistance of the light-sensitive semiconductor material varies unpredictably according to changes of the light falling on it, the measured resistance can be used to produce a random number.

Further, it shall be stated that producing the random number 8 is not just restricted to take place completely in the integrated circuit 1..1'", 1a..1c itself. The measuring means 14 and/or the means for generating a challenge and detecting a respective response of the PUF 3, 3', 3", 3"' can in principal be separated from the IC 1..1"', 1a..1c too.

So, for example, the integrated circuit 1..1"', 1a..1c can comprise a PUF 3, 3', 3", 3"' built of a transparent material that contains many scattering particles or air bubbles. A laser beam irradiates the scattering particles. The resulting speckle pattern is measured in transmission or reflection with a CCD camera. A code can then be extracted from the resulting pattern, which code can be used to produce a random number 8. The code either constitutes a random number 8 or serves as a seed for a pseudo random number generator 14.

It should be noted that alternatively to measuring just a single PUF, several PUFs may be measured simultaneously so as to minimize the number of measuring steps. This presupposes, however, that instead of a single PUF several PUFs are applied on an IC. This simultaneous multiple measurement of PUFs accelerates the calculation of random numbers.

It should further be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of hardware. The mere fact that certain measures are recited in mutually different dependent claims does not indicate that a combination of these measures cannot be used to advantage.

## Claims

1. An integrated circuit (1..1"',1a..1c) with a true random number generator (2..2"'), which true random number generator (2..2"') comprises at least one instable physical uncloneable function (3..3"', 3a, 3a') for generating true random numbers (8, 8'),
**characterized in, that** said integrated circuit (1..1"',1a..1c) further comprises means (4, 4a, 4b) for measuring an electrical property of said physical uncloneable function (3..3"', 3a, 3a'), which electrical property is a basis for said true random numbers (8, 8'), the physical uncloneable function (3..3"', 3a, 3a') being realized by means of:
- a porous dielectric material (33) which is arranged between at least two electrodes (31, 32; 36, 37) wherein the measured electrical property is the impedance of said porous dielectric material (33) or
- a photo sensitive semiconductor material wherein the measured electrical property is the resistance of said semiconductor material or
- a metal with an electric resistance depending on temperature wherein the measured electrical property is said resistance.

2. An integrated circuit (1..1"',1a..1c) as claimed in claim 1, wherein the integrated circuit (1..1"',1a..1c) comprises a pseudo random number generator (14) cooperating with the physical uncloneable function (3..3"', 3a, 3a') in such a way that values (5) measured by means of the measurement means (4, 4a, 4b) are used for a seed for the pseudo random number generator (14).

3. An integrated circuit (1..1"',1a..1c) as claimed in one of the claims 1 to 2, wherein the measurement means (4, 4a, 4b) are arranged to measure an inductance and/or capacity of the physical uncloneable function (3..3"', 3a, 3a').

4. An integrated circuit (1..1"',1a..1c) as claimed in one of the claims 1 to 2, wherein said metal comprises inhomogenous distributed dielectric particles (44).

## Patentansprüche

1. Eine integrierte Schaltung (1..1"', 1 a..1c) mit einem echten Zufallszahlengenerator (2..2"'), wobei der echte Zufallszahlengenerator (2..2"') mindestens eine instabile physikalisch nicht nachahmbare Funktion (3..3"', 3 a, 3 a') zum Erzeugen echter Zufallszahlen (8, 8') umfasst,
**dadurch gekennzeichnet, dass**
die integrierte Schaltung (1..1"', 1 a..1c) des Weiteren Mittel (4, 4 a, 4 b) zum Messen einer elektrischen Eigenschaft der physikalisch nicht nachahmbaren Funktion (3..3"', 3 a, 3 a') umfasst, wobei die elektrische Eigenschaft eine Grundlage für die echten Zufallszahlen (8, 8') bildet, wobei die physikalisch nicht nachahmbare Funktion (3..3"', 3 a, 3 a') realisiert ist durch:
- ein poröses dielektrisches Material (33), welches zwischen mindestens zwei Elektroden (31, 32; 36, 37) angeordnet ist, wobei die gemessene elektrische Eigenschaft die Impedanz des porösen dielektrischen Materials (33) ist, oder
- ein lichtempfindliches Halbleitermaterial, wobei die gemessene elektrische Eigenschaft der Widerstand des Halbleitermaterials ist, oder
- ein Metall mit einem temperaturabhängigen elektrischen Widerstand, wobei die gemessene elektrische Eigenschaft der Widerstand ist.

2. Eine integrierte Schaltung (1..1"', 1 a..1 c) nach Anspruch 1, wobei die integrierte Schaltung (1..1"', 1 a..1 c) einen Zufallszahlengenerator (14) umfasst, der in der Weise mit der physikalisch nicht nachahmbaren Funktion (3..3"', 3 a, 3 a') zusammenarbeitet, dass durch die Messmittel (4, 4 a, 4 b) gemessene Werte (5) als Keim für den Zufallszahlengenerator (14) verwendet werden.

3. Eine integrierte Schaltung (1..1"', 1 a..1 c) nach einem der Ansprüche 1 bis 2, wobei die Messmittel (4, 4 a, 4 b) zum Messen einer Induktivität und/oder einer Kapazität der physikalisch nicht nachahmbaren Funktion 3..3"', 3 a, 3 a') angeordnet sind.

4. Eine integrierte Schaltung (1..1"',1a..1c) nach einem der Ansprüche 1 bis 2, wobei das Metall inhomogen verteilte dielektrische Partikel (44) umfasst.

## Revendications

1. Circuit intégré (1..1"', 1a..1c) avec un générateur à nombres réellement aléatoires (2..2"'), lequel générateur de nombres réellement aléatoires (2.. 2"') comprend au moins une fonction non clonable physique instable (3..3"', 3a, 3a') pour générer des nombres réellement aléatoires (8, 8'),
**caractérisé en ce que**
ledit circuit intégré (1..1"', 1a..1c) comprend de plus des moyens (4, 4a, 4b) pour mesurer une propriété électrique de ladite fonction non clonable physique (3..3"', 3a, 3a'), laquelle propriété électrique est une base pour lesdits nombres réellement aléatoires (8, 8'), la fonction non clonable physique (3..3"', 3a, 3a') étant réalisée au moyen de :
- un matériau diélectrique poreux (33) qui est disposé entre au moins deux électrodes (31, 32 ; 36, 37), dans lequel la propriété électrique mesurée est l'impédance dudit matériau diélectrique poreux (33) ou
- un matériau semi-conducteur photosensible, dans lequel la propriété électrique mesurée est la résistance dudit matériau à semi-conducteur ou
- un métal ayant une résistance électrique dépendant de la température, dans lequel la propriété électrique mesurée est ladite résistance.

2. Circuit intégré (1..1"', 1a..1c) tel que défini dans la revendication 1, dans lequel le circuit intégré (1..1"', 1a..1c) comprend un générateur de nombres pseudo-aléatoires (14) coopérant avec la fonction non clonable physique (3..3"', 3a, 3a'), de telle sorte que les valeurs (5) mesurées à l'aide des moyens de mesure (4, 4a, 4b) sont utilisées comme graine du générateur de nombres pseudo-aléatoires (14).

3. Circuit intégré (1..1"', 1a..1c) tel que revendiqué dans l'une des revendications 1 à 2, dans lequel les moyens de mesure (4, 4a, 4b) sont aptes à mesurer une inductance et/ou une capacité de la fonction non clonable physique (3..3"', 3a, 3a').

4. Circuit intégré (1..1"', 1a..1c) tel que défini dans l'une des revendications 1 à 2, dans lequel ledit métal comprend des particules diélectriques réparties de façon non homogène (44).
